# EUROPEAN PATENT APPLICATION

(11) **EP 4 518 233 A1**
(43) Date of publication of application: **05.03.2025**
(21) Application number: 24194989.0
(22) Date of filing: 16.08.2024
(51) Int. Cl.: H04L 5/00, H04W 72/20

(54) **O-RAN OPEN FRONTHAUL SECTION ENHANCEMENT**

(30) Priority: 01.09.2023 FI 20235980
(71) Applicant: Nokia Solutions and Networks Oy, 02610 Espoo (FI)
(72) Inventor: JACKOWIAK, Przemyslaw, 30-399 Krakow (PL); KURNICKI, Krzysztof, 54-142 Wroclaw (PL); ANZEL, Wojciech, 31-356 Krakow (PL)
(74) Representative: DREISS Patentanwälte PartG mbB

(57) **Abstract**

Various examples of embodiments described herein relate to methods and apparatuses for O-RAN Open Fronthaul Section Enhancement. One such example of an embodiment relates to a method that includes providing, through application of the Section Extension 11, SE11, an offset information indicating an offset between a first allocated Physical Resource Block, PRB, among PRBs of a bundle of PRBs and a lower PRB bundle boundary related to a first PRB among the PRBs of the bundle of PRBs, wherein the bundle of PRBs is associated with an endpoint terminal and wherein the first PRB is an allocated or a non-allocated PRB.

## Description

### Technical Field

Various examples of embodiments described herein relate to a method and an apparatus for O-RAN Open Fronthaul Section Enhancement.

### Background

Overtime, an increasing extension of communication networks has taken place all over the world. Various organizations, such as the European Telecommunications Standards Institute (ETSI), the 3^{rd} Generation Partnership Project (3GPP), Telecoms & Internet converged Services & Protocols for Advanced Networks (TISPAN), the International Telecommunication Union (ITU), 3^{rd} Generation Partnership Project 2 (3GPP2), Internet Engineering Task Force (IETF), the IEEE (Institute of Electrical and Electronics Engineers), the WiMAX Forum and the like are working on standards or specifications for telecommunication networks and access environments.

By way of example, 3GPP defines 5G Core Network Function's (NF's) interfaces and relevant Application Programming Interfaces (APIs) for each NF to communicate between NFs.

### SUMMARY

Various examples of embodiments described in the subject disclosure provide certain advantages, for example in the form of one or more improvements that are either explicitly described herein or otherwise apparent to a person skilled in the art from the subject disclosure. Hence, at least some examples of embodiments of the subject disclosure aim to provide (or otherwise contribute to) at least part of the aforementioned advantages and improvements.

Various aspects of examples of embodiments of the subject disclosure are set forth in the claims and pertain to methods, apparatuses and computer program products in the context of Open Radio Access Network (O-RAN) Section Extension 11 (SE11) enhancement.

At least some of aforementioned advantages and improvements may be achieved through the methods, apparatuses and non-transitory storage media as specified in the claims. Further advantages and improvements may be achieved through the methods, apparatuses and non-transitory storage media set forth in respective dependent claims.

Insofar, according to various examples of embodiments, an apparatus may comprise: at least one processor; and at least one memory storing instructions that, when executed by the at least one processor, may cause the apparatus at least to: provide, through application of the Section Extension 11, SE11, an offset information indicating an offset between a first allocated Physical Resource Block, PRB, among PRBs of a bundle of PRBs and a lower PRB bundle boundary related to a first PRB among the PRBs of the bundle of PRBs, wherein the bundle of PRBs is associated with an endpoint terminal and wherein the first PRB is an allocated or a non-allocated PRB.

According to various examples of embodiments, the apparatus caused to provide the offset information may further comprise the apparatus being caused to reassign and use a reserved 6bit field in a SE11 header for providing the offset information.

According to various examples of embodiments, if a number of PRBs bundles in the bundle of PRBs comprises more than 64 PRBs and the offset comprises more than 62 PRBs, the apparatus caused to reassign and use the reserved 6bit field may further comprise the apparatus being caused to indicate by a predetermined value indicated in the reserved 6bit field that the offset comprises more than 62 PRBs.

According to various examples of embodiments, if the number of bundled PRBs comprises more than 64 PRBs and the offset comprises more than 62 PRBs, the apparatus may further be caused to append an additional field to the SE11 header; and to use the additional field for providing the offset information.

According to various examples of embodiments, the apparatus may further be caused to append the additional field after the numBundPrb and before the first of contInd fields, or the apparatus may further be caused to append the additional field after the bfiniCompHdr and before the first of bfiniCompParam fields.

According to various examples of embodiments, the apparatus may further be caused to enable and/or disable, on an O-RU, a use of an additional field at the SE11 for providing the offset information; wherein, when the use of the additional field is disabled, the apparatus may further be caused to use a reserved 6bit field in a SE11 header for providing the offset information at maximum for up to 63 PRBs.

According to various examples of embodiments, the additional field may be present after the numBundPrb and before the first of contlnd fields, or the additional field may be present after the bfiniCompHdr and before the first of bfiniCompParam fields.

Further, according to various examples of embodiments, an apparatus may comprise: at least one processor; and at least one memory storing instructions that, when executed by the at least one processor, may cause the apparatus at least to: receive, through application of the Section Extension 11, SE11, an offset information indicating an offset between a first allocated Physical Resource Block, PRB, among PRBs of a bundle of PRBs and a lower PRB bundle boundary related to a first PRB among the PRBs of the bundle of PRBs, wherein the bundle of PRBs is associated with an endpoint terminal and wherein the first PRB is an allocated or a non-allocated PRB; based on the offset information, calculate a size of the bundle of PRBs; and based on the calculating, apply subband beamforming on beams associated with the endpoint terminal.

Moreover, according to various examples of embodiments, an apparatus may comprise means for providing, through application of the Section Extension 11, SE11, an offset information indicating an offset between a first allocated Physical Resource Block, PRB, among PRBs of a bundle of PRBs and a lower PRB bundle boundary related to a first PRB among the PRBs of the bundle of PRBs, wherein the bundle of PRBs is associated with an endpoint terminal and wherein the first PRB is an allocated or a non-allocated PRB.

According to various examples of embodiments, the apparatus may further comprise means for reassigning and using a reserved 6bit field in a SE11 header for providing the offset information.

According to various examples of embodiments, if a number of PRBs bundled in the bundle of PRBs comprises more than 64 PRBs and the offset comprises more than 62 PRBs, the apparatus may further comprise means for indicating by a predetermined value indicated in the reserved 6bit field that the offset comprises more than 62 PRBs.

According to various examples of embodiments, if the number of bundled PRBs comprises more than 64 PRBs and the offset comprises more than 62 PRBs, the apparatus may further comprise means for appending an additional field to the SE11 header; and means for using the additional field for providing the offset information.

According to various examples of embodiments, the apparatus may further comprise means for appending the additional field after the numBundPrb and before the first of contlnd fields, or the apparatus may further comprise means for appending the additional field after the bfiniCompHdr and before the first of bfiniCompParam fields.

According to various examples of embodiments, the apparatus may further comprise means for enabling and/or disabling, on an O-RU, a use of an additional field at the SE11 for providing the offset information, wherein, when the use of the additional field is disabled, the apparatus may further comprise means for using a reserved 6bit field in a SE11 header for providing the offset information at maximum for up to 63 PRBs.

According to various examples of embodiments, the additional field may be present after the numBundPrb and before the first of contlnd fields, or the additional field may be present after the bfiniCompHdr and before the first of bfiniCompParam fields.

Further, according to various examples of embodiments, an apparatus may comprise: means for receiving, through application of the Section Extension 11, SE11, an offset information indicating an offset between a first allocated Physical Resource Block, PRB, among PRBs of a bundle of PRBs and a lower PRB bundle boundary related to a first PRB among the PRBs of the bundle of PRBs, wherein the bundle of PRBs is associated with an endpoint terminal and wherein the first PRB is an allocated or a non-allocated PRB; means for calculating, based on the offset information, a size of the bundle of PRBs; and means for applying, based on the calculating, subband beamforming on beams associated with the endpoint terminal.

According to various examples of embodiments, the expression "means for" in combination with a certain function, like "means for providing", may also be understood as "configured to" in combination with a certain function, like "configured to provide".

Further, according to at least some examples of embodiments, a method may comprise providing, through application of the Section Extension 11, SE11, an offset information indicating an offset between a first allocated Physical Resource Block, PRB, among PRBs of a bundle of PRBs and a lower PRB bundle boundary related to a first PRB among the PRBs of the bundle of PRBs, wherein the bundle of PRBs is associated with an endpoint terminal and wherein the first PRB is an allocated or a non-allocated PRB.

According to at least some examples of embodiments, the providing may further comprise reassigning and using a reserved 6bit field in a SE11 header for providing the offset information.

According to at least some examples of embodiments, if a number of PRBs bundled in the bundle of PRBs comprises more than 64 PRBs and the offset comprises more than 62 PRBs, the reassigning and using may further comprise indicating by a predetermined value indicated in the reserved 6bit field that the offset comprises more than 62 PRBs.

According to at least some examples of embodiments, if the number of bundled PRBs comprises more than 64 PRBs and the offset comprises more than 62 PRBs, the method may further comprise appending an additional field to the SE11 header; and using the additional field for providing the offset information.

According to at least some examples of embodiments, the method may further comprise appending the additional field after the numBundPrb and before the first of contlnd fields, or the method may further comprise appending the additional field after the bfiniCompHdr and before the first of bfiniCompParam fields.

According to at least some examples of embodiments, the method may further comprise enabling and/or disabling, on an O-RU, a use of an additional field at the SE11 for providing the offset information, wherein, when the use of the additional field is disabled, the method may further comprise using a reserved 6bit field in a SE11 header for providing the offset information at maximum for up to 63 PRBs.

According to at least some examples of embodiments, the additional field may be present after the numBundPrb and before the first of contlnd fields, or the additional field may be present after the bfiniCompHdr and before the first of bfiniCompParam fields.

Further, according to at least some examples of embodiments, a method may comprise receiving, through application of the Section Extension 11, SE11, an offset information indicating an offset between a first allocated Physical Resource Block, PRB, among PRBs of a bundle of PRBs and a lower PRB bundle boundary related to a first PRB among the PRBs of the bundle of PRBs, wherein the bundle of PRBs is associated with an endpoint terminal and wherein the first PRB is an allocated or a non-allocated PRB; based on the offset information, calculating a size of the bundle of PRBs; and based on the calculating, applying subband beamforming on beams associated with the endpoint terminal.

Furthermore, according to at least some examples of embodiments, there may be provided a computer program product for a computer, including software code portions for performing the steps of any of the above-outlined methods, when said product is run on the computer.

According to at least some examples of embodiments, in relation to the computer program product, the computer program product may include a computer-readable medium on which said software code portions are stored, and/or the computer program product may be directly loadable into the internal memory of the computer and/or transmittable via a network by means of at least one of upload, download and push procedures.

Any one of the aspects mentioned according to the claims facilitates O-RAN Open Fronthaul Section Enhancement, thereby providing at least part of the aforementioned advantages and improvements.

In more detail, the subject disclosure describes O-RAN Open Fronthaul Section Enhancement, which may, according to some examples of embodiments, prove advantageous over a proprietary solution for at least the following reasons.

Examples of embodiments described in the subject disclosure may, for instance, provide a simple and flexible solution for enabling a correct assignment of a PRB to a beam.

Further advantages may become apparent to a person skilled in the art from the following detailed description.

### BRIEF DESCRIPTION OF THE DRAWINGS

Some examples of embodiments of the subject disclosure are described below, by way of example only, with reference to the accompanying drawings, in which:
FIG. 1 shows an exemplary situation, where lack of control over size of first PRB bundle allocation creates wrong beam allocation, according to various examples of embodiments of the subject disclosure;
FIG. 2 shows a proposed offset value, which allows for correct conveying of PRB bundle boundaries within SE11, with first bundle being smaller than other ones (for a given UE/section), according to various examples of embodiments of the subject disclosure;
FIG. 3A and FIG. 3B show proposed additional fields in SE11, wherein bundleOffset2 is optional, according to various examples of embodiments of the subject disclosure;
FIG. 4 shows a flowchart illustrating steps corresponding to an example method according to various examples of embodiments of the subject disclosure;
FIG. 5 shows a flowchart illustrating steps corresponding to an example method according to various examples of embodiments of the subject disclosure;
FIG. 6 shows a block diagram illustrating an example apparatus according to various examples of embodiments of the subject disclosure; and
FIG. 7 shows a block diagram illustrating an example apparatus according to various examples of embodiments of the subject disclosure.

### DEATILED DESCRIPTION

In general, two or more end points involved in a communication therebetween may be implemented as a particular type of end point (e.g. a communication station or entity or function, such as a terminal device, user equipment (UE), or other communication network element, a database, a server, host, etc.), or as one or more network elements or functions (e.g. virtualized network functions), such as communication network control elements or functions, for example access network elements like access points (APs), radio base stations (BSs), relay stations, eNBs, gNBs etc., and core network elements or functions, for example control nodes, support nodes, service nodes, gateways, user plane functions, access and mobility functions, etc.. These end points may belong to a single communication network system, different communication network systems, or a combination of at least one same communication network system and at least one different communication network system.

In the following, various examples of embodiments will be described using, as an example of a communication network to which examples of embodiments may be applied, a communication network architecture based on 3GPP standards for a communication network, such as a 5G/NR, without restricting the examples of embodiments to such an architecture. It, however, is obvious for a person skilled in the art that the examples of embodiments may also be applied to other kinds of communication networks like 4G and/or LTE (and even 6G and higher) where mobile communication principles are integrated, e.g. Wi-Fi, worldwide interoperability for microwave access (WiMAX), Bluetooth^{®}, personal communications services (PCS), ZigBee^{®}, wideband code division multiple access (WCDMA), systems using ultra-wideband (UWB) technology, mobile ad-hoc networks (MANETs), wired access, etc.. Furthermore, without loss of generality, the description of some examples of embodiments is related to a mobile communication network, but the subject disclosure can be extended and applied to any other type of communication network, such as a wired communication network or datacenter networking.

The following examples of embodiments are to be understood only as illustrative in nature. Although portions of the subject disclosure may refer to the expressions "an", "one", or "some" example(s) of embodiment(s) in several specific locations, this does not necessarily mean that each such reference is related to the same example(s) of embodiment(s), or that the described feature only applies to a single example of an embodiment. Individual features from different examples of embodiments may also be combined to provide other examples of embodiments. Furthermore, terms like "comprising" and "including" should be understood as not limiting the described examples of embodiments to consist of only those features that have been mentioned; such examples of embodiments can also contain features, structures, units, modules etc. that have not been specifically mentioned.

A simplified system architecture of a (tele)communication network including a mobile communication system, where some examples of embodiments, are applicable may include an architecture of one or more communication networks. The one or more communication networks may include wireless access network subsystem(s) and core network(s). Such an architecture may include one or more communication network control elements or functions, access network elements, radio access network elements, cloud based radio access elements, access service network gateways or base transceiver stations, such as a base station (BS), an access point (AP), a NodeB (NB), an eNB, a cloud RAN node, or a gNB, a distributed or a centralized unit (CU), which controls a respective coverage area or cell(s) and with which one or more communication stations such as communication elements or functions, like user devices (e.g. customer devices), mobile devices, or terminal devices, like a UE, or another device having a similar function, such as a modem chipset, a chip, a module etc., which can also be part of a station, an element, a function or an application configured to conduct a communication, such as a UE, an entity or function usable in a machine-to-machine communication architecture, or attached as a separate element to such an element, function or application capable of conducting a communication, or the like, are configured to communicate via one or more channels via one or more communication beams for transmitting several types of data in a plurality of access domains. Furthermore, (core) network elements or network functions ((core) network control elements or network functions, (core) network management elements or network functions), such as gateway network elements/functions, mobility management entities, a mobile switching center, servers, databases and the like may be included.

Functions and interconnections of the described elements and functions, which also depend on the actual network type, are apparent to those skilled in the art and may be described in corresponding specifications, so that a description thereof is omitted herein. However, it is to be noted that several additional network elements and signaling links may be employed for a communication to or from an element, function or application, like a communication endpoint, a communication network control element, such as a server, a gateway, a radio network controller, and other elements of the same or other communication networks besides those described in detail herein below.

It should be appreciated that according to some examples of embodiments, a so-called "liquid" or flexible network concept may be implemented where the operations and functionalities of a network element, a network function, or of another entity of the network, may be performed in different entities or functions, such as in a node, host or server, in a flexible manner. Thus, a "division of labor" between involved network elements, functions or entities may vary case by case.

The subject disclosure, in some examples of embodies, relates to O-RAN Open Fronthaul Section Enhancement.

The present specification refers to O-RAN Fronthaul interface specification, especially the Control Plane part.

O-RAN.WG4.CUS.0-R003-v12.00 (aka O-RAN CUS, chapters 7.7.11; and 7.9.4) defines Section Extension 11 for so-called "Flexible beamforming weights". This method can be used for two distinct applications:
1. Sending only beamlDs over fronthaul. (Applying the beam weights that were sent beforehand). The method provides optimization, for example, for sub-band beamforming: applying more than 1 beamlD to a single UE (for different PRBs). This method provides CP message size & complexity reduction comparing to baseline solution where every range of PRBs with different beamld requires creation of separated section including section and section extension headers overhead. Table 7.7.11.1-2 in O-RAN CUS (Chapter 7.7.11: SE 11: Flexible beamforming weights) shows a Section Extension 11 Data Format when disableBFWs=1.
2. Sending beamforming weights I/Q data in real-time between O-DU and O-RU, for example allowing real-time calculation of the beamforming pattern, basing on UE channel sounding. This method provides CP message size & complexity reduction comparing to baseline solution where every range of PRBs with different beamld requires creation of separated section including section and section extension headers overhead. In order to send beamforming weights, the O-DU sets the disableBFWs field to 0 (zero). Table 7.7.11.1-1 in O-RAN CUS (Chapter 7.7.11: SE 11: Flexible beamforming weights) shows a Section Extension 11 Data Format when disableBFWs=0.

The present specification discloses enhancement of both applications of SE11, according to various examples of embodiments. Details of sub-band beamforming and certain use cases shall be considered.

The subband beamforming allows to use different beams for different PRBs of the same UE. The granularity of such beam allocation is defined by the SE11's field **numBundPrb.** The smaller the PRB bundle size, the more precise beamforming (and potentially higher performance of the system towards a single UE). However, smaller subbands require more beamweights sent overall (per the whole channel bandwidth, e.g. 273 PRBs over 100MHz channel), which in turn could prove too complex in calculations for any element and/or function of the system (Open Distributed Unit (O-DU), Open Radio Unit (O-RU), UE).

The RAD (Reset after PRB discontinuity) field of SE11 may need to be noted as well. This field applies when used in conjunction with SEs allowing non-contiguous PRB allocation; indicates whether the PRB bundle boundary is reset after discontinuity in the PRB allocation (RAD = 1), or the PRB bundle boundaries are mapped to the PRBs regardless of the discontinuity.

Additionally, 5G 3GPP standard offers Resource Allocation Type 0 (RAT0) and/or Resource Allocation Type 1 (RAT1) allocation types for downlink (DL) user data (PDSCH). RAT0 method allows for simplified UE frequency (PRB) allocation - instead of defining exact PRB ranges, only the RBG (resource block group) masking is communicated (1 or more out of 17 RBGs at max).

The present specification considers alternative solutions without bundleOffset2 (as outlined below in more detail). The addition of bundleOffset2 may extend applicability of the solution to bundle sizes greater than 64.

There are certain situations, where the O-RAN specification of SE11 allows for the PRB bundle to be smaller than numBundPrb (as sent in SE11 for that section). These cases include:
- Last PRBs before discontinuity; and/or
- First PRBs after discontinuity; and/or
- Last PRBs allocated to the section.

However, the current specification of SE11 does not allow for the first PRB bundle within the allocation to be smaller than the numBundPrbs. The following exemplary situation may be considered as an example:
- O-DU calculates the BF weights starting from PRB0, with 8 PRB subband size (i.e. every 8th PRB is a start of beamforming subband). One of reasons to do so is the way the UE reported its Sounding Reference Signal (SRS) (starting from PRB0).
- O-DU allocates UE data with RAT0/ RBG granularity. Resource Block Group (RBG) size is 4PRBs (which is a result of O-DU configuration).
- O-DU allocates the user data for a given UE in RBGs 1-5.

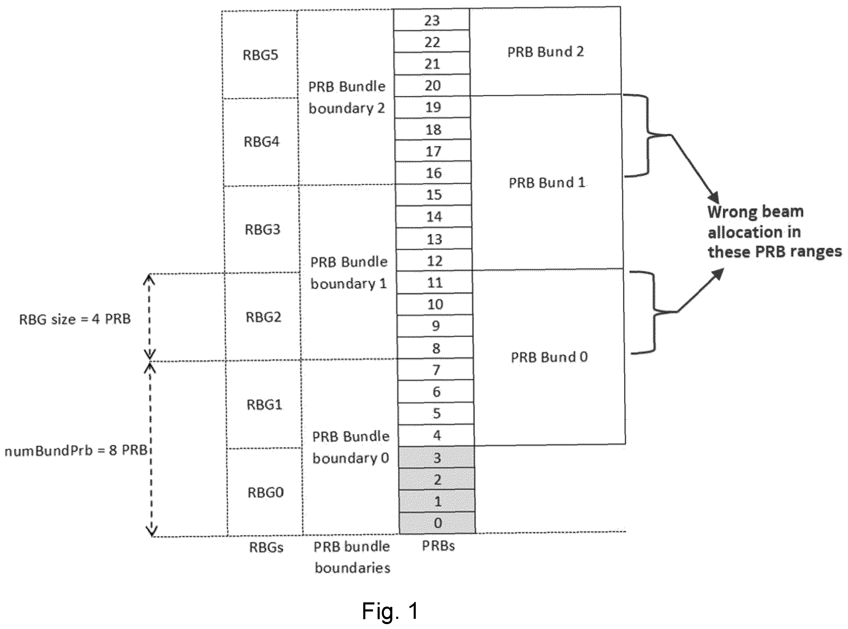

In this situation, as depicted in FIG. 1, which shows an exemplary situation, according to various examples of embodiments, the beam applied to RBG1 is correct. However, the beam allocated to RBG2 should actually be "PRB Bund 1", as this was the result calculated from a UE's feedback. O-RAN compliant system will wrongly assign "PRB Bund 0" beam, because the size of the subband (communicated in numBundPrb) needs to be retained for first bundle in bandwidth.

This situation is one possible example, wherein different values of numBundPrb and RBGsize can also pose similar issues.

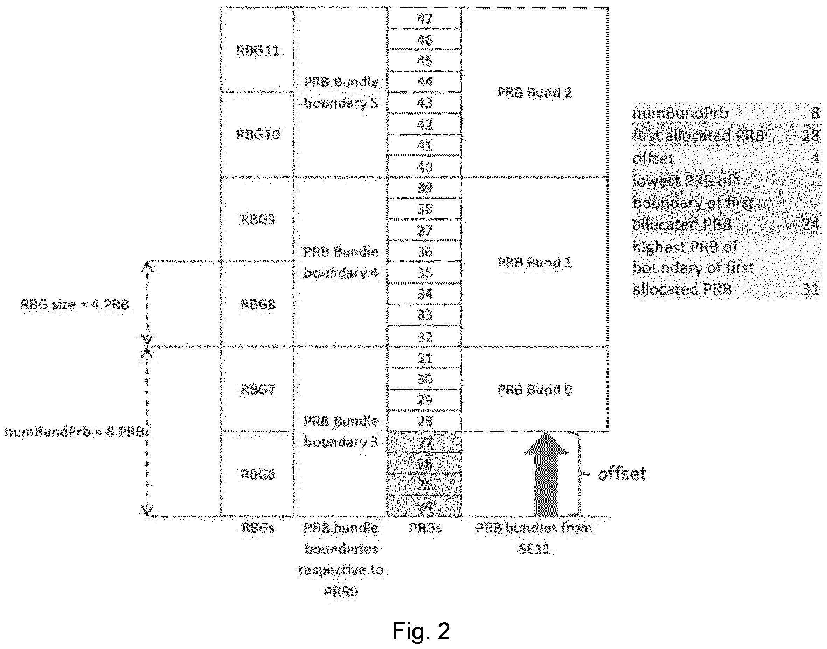

According to various examples of embodiments, O-DU may inform the O-RU of an offset between first allocated PRB of the beam/bundle and the PRB bundle boundary. With this information, the O-RU is able to calculate the size of first PRB bundle and/or to properly apply the beamforming, as illustrated in FIG. 2, which shows a proposed offset value that allows for correct conveying of PRB bundle boundaries within SE11, with first bundle being smaller than other ones (for the given UE/section).

A modification of O-RAN SE11 is proposed according to various examples of embodiments, with different interpretation of currently existing reserved field(s), and potentially additionally incorporated field(s).

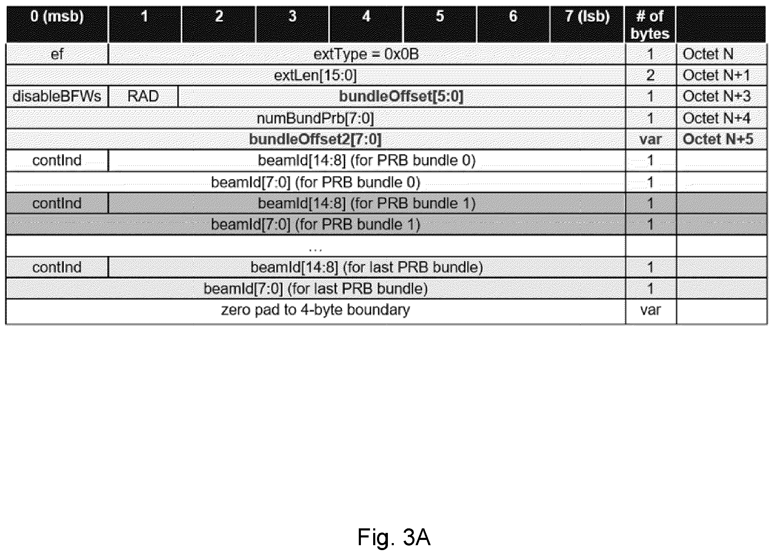

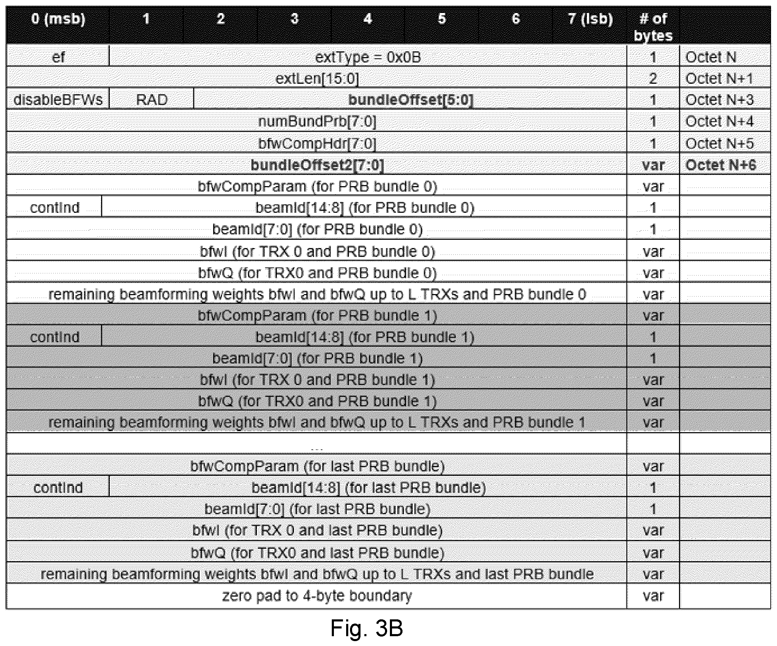

Referring now to FIG. 3A and FIG. 3B, there are shown proposed additional fields in SE11 (bundleOffset and bundleOffset2, wherein bundleOffset2 is optional), according to various examples of embodiments. The reserved (6bit) field of SE11 is proposed to be reasigned and used to convey ***bundleOffset (6bit),*** with following interpretation:
**Description:** offset between first allocated PRB and lowest PRB of PRB bundle boundary containing this PRB
**Value range:** {all zeros - all ones }
   If numBundPrb is less than or equal to 64 or O-RU does not support bundleOffset2 or O-DU did not configure O-RU to enable bundleOffset2 then this value is the actual offset from 0 to 63.
   Otherwise, value 111111b means that bundleOffset2 is present. Any other value is the actual offset from 0 to 62.
   The actual offset must be less than numBundPrb.
**Type:** unsigned integer
**Default Value:** 0b (first allocated PRB is lowest PRB of PRB bundle boundary containing this PRB)

If numBundPrb is greater than 64 and O-RU supports bundleOffset2 and O-DU configured O-RU to enable bundleOffset2 and more than 62 PRBs offset is needed, additional optional field bundleOffset2 can be appended to the SE11 header (after numBundPrb and before the first of contlnd fields, or after the bfiniCompHdr and before the first of bfiniCompParam fields).

### bundleOffset2

**Description:** offset between first allocated PRB and lowest PRB of PRB bundle boundary containing this PRB calculated as 63 + bundleOffset2. The field is mandatory when numBundPrb is greater than 64 and O-RU supports bundleOffset2 and O-DU configured O-RU to enable bundleOffset2 and bundleOffset=111111b, otherwise it is not present.
**Value range:** {all zeros - 192, remaining values are reserved}
   The actual offset must be less than numBundPrb.
**Type:** unsigned integer
**Default Value:** 0b (offset between first allocated PRB and lowest PRB of PRB bundle boundary containing this PRB is equal 63)

According to various examples of embodiments, another variation of the above-outlined proposed solution according to the present specification may be:
a) to convey only bundleOffset (i.e., remove bundleOffset2 from the proposal); in this case the solution works well for bundle size up to 64 (i.e., numBundPRB <= 64);
b) to convey bundleOffset and optionally bundleOffset2 under conditions listed in the above-outlined proposed solution but without possibility that O-RU supports only bundleOffset (i.e. without support for bundleOffset2) and without possibility that O-DU can enable/disable bundleOffset2 on O-RU supporting this field;
c) to convey bundleOffset and optionally bundleOffset2 under conditions listed in the above-outlined proposed solution but without possibility that O-RU supports only bundleOffset (i.e. without support for bundleOffset2);
d) to convey bundleOffset and optionally bundleOffset2 under conditions listed in the above-outlined proposed solution but without possibility that O-DU can enable/disable bundleOffset2 on O-RU supporting this field.
More variations of the proposed solution are possible.

In the following, further examples of embodiments are described in relation to the aforementioned methods and/or apparatuses.

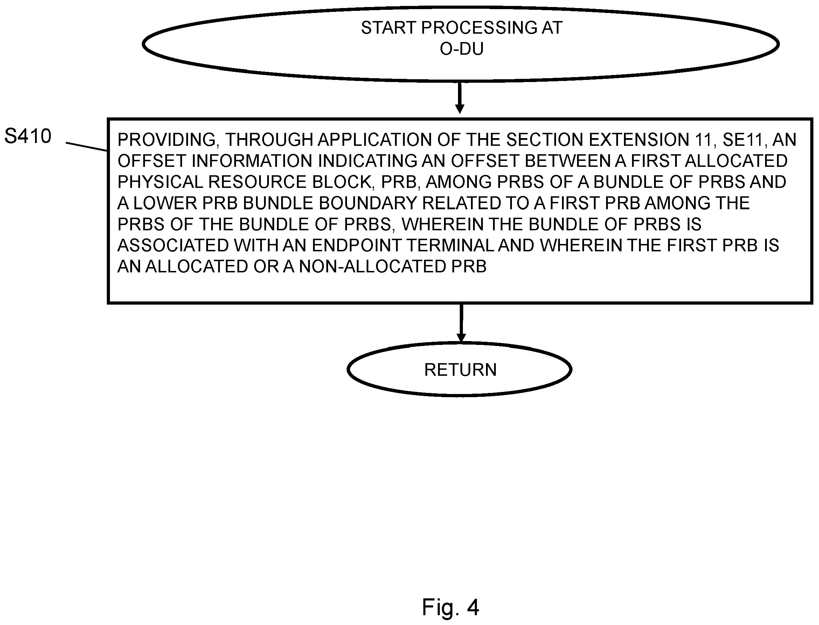

Referring now to FIG. 4, there is shown a flowchart illustrating steps corresponding to an example method according to various examples of embodiments of the subject disclosure.

In particular, according to FIG. 4, in S410, the method comprises providing, through application of the Section Extension 11, SE11, an offset information indicating an offset between a first allocated Physical Resource Block, PRB, among PRBs of a bundle of PRBs and a lower PRB bundle boundary related to a first PRB among the PRBs of the bundle of PRBs. The bundle of PRBs is associated with an endpoint terminal and the first PRB is an allocated or a non-allocated PRB.

It shall be noted that the offset information may indicate such offset as illustrated with reference to FIG. 2. Moreover, the method may be applied at an O-DU, e.g. such O-DU as outlined above with reference to FIGS. 1 to 3A and 3B. Furthermore, the offset information may be provided to an O-RU, e.g. such O-RU as outlined above with reference to FIGS. 1 to 3A and 3B.

Moreover, according to at least some examples of embodiments, the providing may further comprise reassigning and using a reserved 6bit field in a SE11 header for providing the offset information.

According to at least some examples of embodiments, if a number of PRBs bundled in the bundle of PRBs comprises more than 64 PRBs and the offset comprises more than 62 PRBs, the reassigning and using may further comprise indicating by a predetermined value indicated in the reserved 6bit field that the offset comprises more than 62 PRBs.

According to at least some examples of embodiments, if the number of bundled PRBs comprises more than 64 PRBs and the offset comprises more than 62 PRBs, the method may further comprise appending an additional field to the SE11 header; and using the additional field for providing the offset information.

According to at least some examples of embodiments, the method may further comprise appending the additional field after the numBundPrb and before the first of contlnd fields, or the method may further comprise appending the additional field after the bfiniCompHdr and before the first of bfiniCompParam fields.

It shall be noted that with regard to SE11, there are two formats of SE11 depending on a value of the disableBFWs field. In one of these formats the additional field (e.g. bundleOffset2) may be added between the numBundPrb and first of contlnd fields, as e.g. illustrated in FIG. 3A, wherein in the other one format the additional field (e.g. bundleOffset2) may be added between the bfiniCompHdr and first of bfiniCompParam fields, as e.g. illustrated in FIG. 3B.

According to at least some examples of embodiments, the method may further comprise enabling and/or disabling, on an O-RU, a use of an additional field at the SE11 for providing the offset information, wherein, when the use of the additional field is disabled, the method may further comprise using a reserved 6bit field in a SE11 header for providing the offset information at maximum for up to 63 PRBs.

It shall be noted that the enabling and/or disabling may be understood to have different interpretation of bundleOffset=63. For example, according to various examples of embodiments, if enabled, then an O-RU may interpret bundleOffset=63 as a special value indicating that the additional field, like e.g. bundleOffset2, is present and may use bundleOffset2 to calculate a final offset value. Whereas if disabled, then the O-RU may interpret bundleOffset=63 as the final offset value to be equal to 63 (i.e. offset equal to 63 PRBs) and does not expect bundleOffset2 in the SE11.

In addition, according to various examples of embodiments, it shall be noted that such enabling and/or disabling may be (but is not limited to), for example, a M-Plane message sent from an O-DU to an O-RU before sending FCP with SE11, so that the O-RU upon reception of the FCP would already have a knowledge of how to interpret bundleOffset=63.

According to at least some examples of embodiments, the additional field may be present after the numBundPrb and before the first of contlnd fields, or the additional field may be present after the bfiniCompHdr and before the first of bfiniCompParam fields.

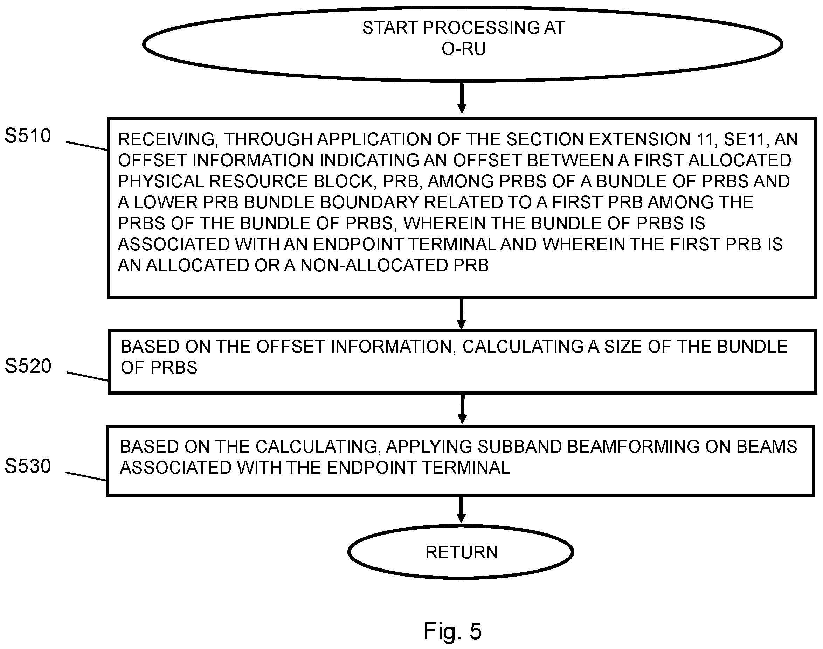

Referring now to FIG. 5, there is shown a flowchart illustrating steps corresponding to an example method according to various examples of embodiments of the subject disclosure.

In particular, according to FIG. 5, in S510, the method comprises receiving, through application of the Section Extension 11, SE11, an offset information indicating an offset between a first allocated Physical Resource Block, PRB, among PRBs of a bundle of PRBs and a lower PRB bundle boundary related to a first PRB among the PRBs of the bundle of PRBs. The bundle of PRBs is associated with an endpoint terminal and the first PRB is an allocated or a non-allocated PRB.

In addition, in S520, the method comprises calculating, based on the offset information, a size of the bundle of PRBs.

Moreover, in S530, the method comprises applying, based on the calculating, subband beamforming on beams associated with the endpoint terminal.

It shall be noted that the offset information may indicate such offset as illustrated with reference to FIG. 2. Moreover, the method may be applied at an O-RU, e.g. such O-RU as outlined above with reference to FIGS. 1 to 3A and 3B. Furthermore, the offset information may be received from an O-DU, e.g. such O-DU as outlined above with reference to FIGS. 1 to 3A and 3B.

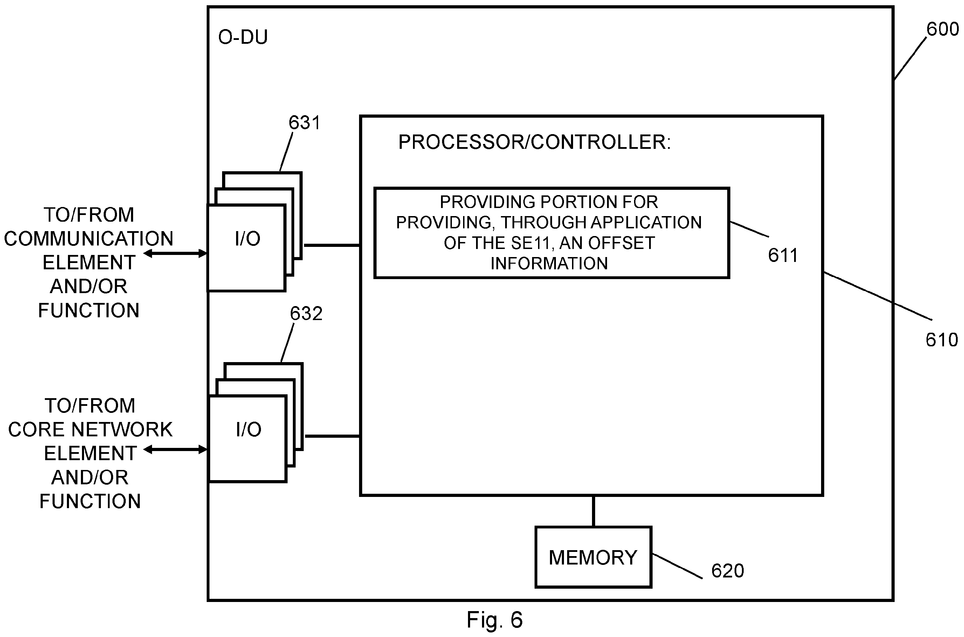

Referring now to FIG. 6, FIG. 6 shows a block diagram illustrating an example apparatus according to various examples of embodiments of the subject disclosure.

Specifically, FIG. 6 shows a block diagram illustrating an apparatus 600, which may represent an O-DU, as outlined above with reference to FIGS. 1 to 3A and 3B, according to various examples of embodiments, which may participate in O-RAN Open Fronthaul Section Enhancement. Furthermore, even though reference is made to an O-DU, the O-DU may be also another device or function having a similar task, such as a chipset, a chip, a module, an application etc., which can also be part of a network element or attached as a separate element to a network element, or the like. It should be understood that each block and any combination thereof may be implemented by various means or their combinations, such as hardware, software, firmware, one or more processors and/or circuitry.

The apparatus 600 shown in FIG. 6 may include a processing circuitry, a processing function, a control unit or a processor 610, such as a CPU or the like, which is suitable to participate in O-RAN Open Fronthaul Section Enhancement. The processor 610 may include one or more processing portions or functions dedicated to specific processing as described below, or the processing may be run in a single processor or processing function. Portions for executing such specific processing may be also provided as discrete elements or within one or more further processors, processing functions or processing portions, such as in one physical processor like a CPU or in one or more physical or virtual entities, for example. Reference signs 631 and 632 denote input/output (I/O) units or functions (interfaces) connected to the processor or processing function 610. The I/O units 631 and 632 may be a combined unit including communication equipment towards several entities/elements, or may include a distributed structure with a plurality of different interfaces for different entities/elements. Reference sign 620 denotes a memory usable, for example, for storing data and programs/instructions to be executed by the processor or processing function 610 and/or as a working storage of the processor or processing function 610. It is to be noted that the memory 620 may be implemented by using one or more memory portions of the same or different type of memory, but may also represent an external memory, e.g. an external database provided on a cloud server.

The processor or processing function 610 is configured to execute processing related to the above described processing. In particular, the processor or processing circuitry or function 610 includes one or more of the following sub-portions. Sub-portion 611 is a providing portion, which is usable as a portion for providing, through application of the Section Extension 11, an offset information. The portion 611 may be configured to perform processing according to S410 of FIG. 4.

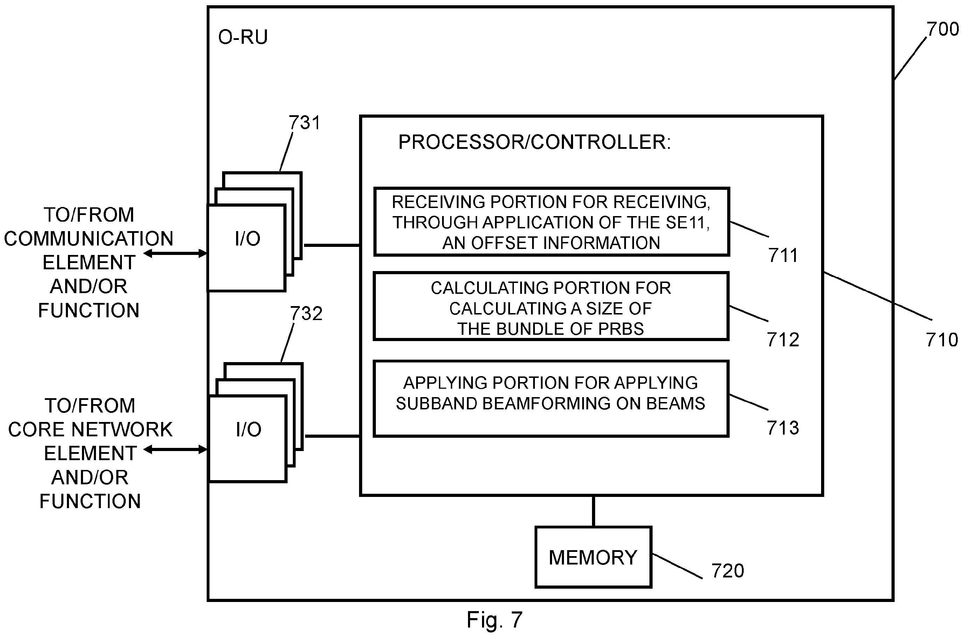

Referring now to FIG. 7, FIG. 7 shows a block diagram illustrating an example apparatus according to various examples of embodiments of the subject disclosure.

Specifically, FIG. 7 shows a block diagram illustrating an apparatus 700, which may represent an O-RU as outlined above with reference to FIGS. 1 to 3A and 3B, according to various examples of embodiments, which may participate in O-RAN Open Fronthaul Section Enhancement. Furthermore, even though reference is made to an O-RU, the O-RU may be also another device or function having a similar task, such as a chipset, a chip, a module, an application etc., which can also be part of a network element or attached as a separate element to a network element, or the like. It should be understood that each block and any combination thereof may be implemented by various means or their combinations, such as hardware, software, firmware, one or more processors and/or circuitry.

The apparatus 700 shown in FIG. 7 may include a processing circuitry, a processing function, a control unit or a processor 710, such as a CPU or the like, which is suitable to participate in O-RAN Open Fronthaul Section Enhancement. The processor 710 may include one or more processing portions or functions dedicated to specific processing as described below, or the processing may be run in a single processor or processing function. Portions for executing such specific processing may be also provided as discrete elements or within one or more further processors, processing functions or processing portions, such as in one physical processor like a CPU or in one or more physical or virtual entities, for example. Reference signs 731 and 732 denote input/output (I/O) units or functions (interfaces) connected to the processor or processing function 710. The I/O units 731 and 732 may be a combined unit including communication equipment towards several entities/elements, or may include a distributed structure with a plurality of different interfaces for different entities/elements. Reference sign 720 denotes a memory usable, for example, for storing data and programs/instructions to be executed by the processor or processing function 710 and/or as a working storage of the processor or processing function 710. It is to be noted that the memory 720 may be implemented by using one or more memory portions of the same or different type of memory, but may also represent an external memory, e.g. an external database provided on a cloud server.

The processor or processing function 710 is configured to execute processing related to the above described processing. In particular, the processor or processing circuitry or function 710 includes one or more of the following sub-portions. Sub-portion 711 is a receiving portion, which is usable as a portion for receiving, through application of the Section Extension 11, an offset information. The portion 711 may be configured to perform processing according to S510 of FIG. 5. Further, sub-portion 712 is a calculating portion, which is usable as a portion for calculating a size of a bundle of PRBs. The portion 712 may be configured to perform processing according to S520 of FIG. 5. Moreover, sub-portion 713 is an applying portion, which is usable as a portion for applying subband beamforming on beams. The portion 713 may be configured to perform processing according to S530 of FIG. 5.

It shall be noted that the apparatuses 600 and 700 as outlined above with reference to FIGS. 6 and 7 may comprise further/additional sub-portions, which may allow the apparatuses 600 and 700 to perform such methods/method steps as outlined above with reference to FIGS. 1 to 3A and 3B, as well as FIGS. 4 to 5.

Moreover, according to various examples of embodiments, an apparatus may comprise means for providing, through application of the Section Extension 11, SE11, an offset information indicating an offset between a first allocated Physical Resource Block, PRB, among PRBs of a bundle of PRBs and a lower PRB bundle boundary related to a first PRB among the PRBs of the bundle of PRBs, wherein the bundle of PRBs is associated with an endpoint terminal and wherein the first PRB is an allocated or a non-allocated PRB.

According to various examples of embodiments, the apparatus may further comprise means for reassigning and using a reserved 6bit field in a SE11 header for providing the offset information.

According to various examples of embodiments, if a number of PRBs bundled in the bundle of PRBs comprises more than 64 PRBs and the offset comprises more than 62 PRBs, the apparatus may further comprise means for indicating by a predetermined value indicated in the reserved 6bit field that the offset comprises more than 62 PRBs.

According to various examples of embodiments, if the number of bundled PRBs comprises more than 64 PRBs and the offset comprises more than 62 PRBs, the apparatus may further comprise means for appending an additional field to the SE11 header; and means for using the additional field for providing the offset information.

According to various examples of embodiments, the apparatus may further comprise means for appending the additional field after the numBundPrb and before the first of contlnd fields, or the apparatus may further comprise means for appending the additional field after the bfiniCompHdr and before the first of bfiniCompParam fields.

According to various examples of embodiments, the apparatus may further comprise means for enabling and/or disabling, on an O-RU, a use of an additional field at the SE11 for providing the offset information, wherein, when the use of the additional field is disabled, the apparatus may further comprise means for using a reserved 6bit field in a SE11 header for providing the offset information at maximum for up to 63 PRBs.

According to various examples of embodiments, the additional field may be present after the numBundPrb and before the first of contlnd fields, or the additional field may be present after the bfiniCompHdr and before the first of bfiniCompParam fields.

Further, according to various examples of embodiments, an apparatus may comprise: means for receiving, through application of the Section Extension 11, SE11, an offset information indicating an offset between a first allocated Physical Resource Block, PRB, among PRBs of a bundle of PRBs and a lower PRB bundle boundary related to a first PRB among the PRBs of the bundle of PRBs, wherein the bundle of PRBs is associated with an endpoint terminal and wherein the first PRB is an allocated or a non-allocated PRB; means for calculating, based on the offset information, a size of the bundle of PRBs; and means for applying, based on the calculating, subband beamforming on beams associated with the endpoint terminal.

According to various examples of embodiments, the expression "means for" in combination with a certain function as outlined above, like e.g. "means for providing", may also be understood as "configured to" in combination with a certain function, like e.g. "configured to provide".

Furthermore, according to at least some examples of embodiments, there may be provided a computer program product for a computer, including software code portions for performing the steps of any of the above-outlined methods, when said product is run on the computer.

According to at least some examples of embodiments, in relation to the computer program product, the computer program product may include a computer-readable medium on which said software code portions are stored, and/or the computer program product may be directly loadable into the internal memory of the computer and/or transmittable via a network by means of at least one of upload, download and push procedures.

It should be appreciated that
- an access technology via which traffic is transferred to and from an entity in the communication network may be any suitable present or future technology, such as WLAN (Wireless Local Access Network), WiMAX (Worldwide Interoperability for Microwave Access), LTE, LTE-A, 5G, 6G, Bluetooth, Infrared, and the like may be used; additionally, examples of embodiments may also apply wired technologies, e.g. IP based access technologies like cable networks or fixed lines.
- examples of embodiments suitable to be implemented as software code or portions thereof and being run using a processor or processing function are software code independent and can be specified using any known or future developed programming language, such as a high-level programming language, such as objective-C, C, C++, C#, Java, Python, Javascript, other scripting languages etc., or a low-level programming language, such as a machine language, or an assembler.
- implementation of examples of embodiments is hardware independent and may be implemented using any known or future developed hardware technology or any hybrids of these, such as a microprocessor or CPU (Central Processing Unit), MOS (Metal Oxide Semiconductor), CMOS (Complementary MOS), BiMOS (Bipolar MOS), BiCMOS (Bipolar CMOS), ECL (Emitter Coupled Logic), and/or TTL (Transistor-Transistor Logic).
- examples of embodiments may be implemented as individual devices, apparatuses, units, means or functions, or in a distributed fashion, for example, one or more processors or processing functions may be used or shared in the processing, or one or more processing sections or processing portions may be used and shared in the processing, wherein one physical processor or more than one physical processor may be used for implementing one or more processing portions dedicated to specific processing as described,
- an apparatus may be implemented by a semiconductor chip, a chipset, or a (hardware) module including such chip or chipset;
- examples of embodiments may also be implemented as any combination of hardware and software, such as ASIC (Application Specific IC (Integrated Circuit)) components, FPGA (Field-programmable Gate Arrays) or CPLD (Complex Programmable Logic Device) components or DSP (Digital Signal Processor) components.
- examples of embodiments may also be implemented as computer program products, including a computer usable medium having a computer readable program code embodied therein, the computer readable program code adapted to execute a process as described in embodiments, wherein the computer usable medium may be a non-transitory medium.

The term "circuitry" may refer to one or more or all of the following examples of embodiments:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term herein, including in any claims. As a further example, as used herein, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The term "non-transitory," as used herein, is a limitation of the medium itself (e.g., tangible, not a signal ) as opposed to a limitation on data storage persistency (e.g., RAM vs. ROM).

As used herein, "at least one of the following: " and "at least one of " and similar wording, where the list of two or more elements are joined by "and" or "or", mean at least any one of the elements, or at least any two or more of the elements, or at least all the elements.

Although the subject disclosure has been described herein before with reference to various examples of embodiments thereof, the subject disclosure is not limited thereto and it will be apparent to a person skilled in the art that various modifications can be made to the subject disclosure.

Various examples of embodiments described herein relate to methods and apparatuses for O-RAN Open Fronthaul Section Enhancement. One such example of an embodiment relates to a method that includes providing, through application of the Section Extension 11, SE11, an offset information indicating an offset between a first allocated Physical Resource Block, PRB, among PRBs of a bundle of PRBs and a lower PRB bundle boundary related to a first PRB among the PRBs of the bundle of PRBs, wherein the bundle of PRBs is associated with an endpoint terminal and wherein the first PRB is an allocated or a non-allocated PRB.

The following meanings for the abbreviations used herein apply:
- 3GPP: 3^{rd} Generation Partnership Project
- 3GGP2: 3^{rd} Generation Partnership Project 2
- 4G: Fourth Generation
- 5G: Fifth Generation
- 5GC: 5G Core Network
- 6G: Sixth Generation
- AP: Access Point
- API: Application Programming Interface
- BF: Beamforming
- BS: Base Station
- CDMA: Code Division Multiple Access
- CPU: Central Processing Unit
- CUS: Control User Synchronization
- eNB: Evolved Node B
- ETSI: European Telecommunications Standards Institute
- gNB: Next Generation Node B
- IEEE: Institute of Electrical and Electronics Engineers
- ITU: International Telecommunication Union
- L2PS: Layer 2 Packet Scheduler
- LTE: Long Term Evolution
- LTE-A: Long Term Evolution-Advanced
- MANETs: Mobile Ad-Hoc Networks
- NB: Node B
- NG-RAN: NG Radio Access Network
- NR: New Radio
- NW: Network
- O-DU: Open Distributed Unit
- O-RAN: Open Radio Access Network
- O-RU: Open Radio Unit
- PDSCH: Physical Downlink Shared Channel (user data)
- PRB: Physical Resource Block
- RAD: Reset after PRB discontinuity
- RAM: Random Access Memory
- RAN: Radio Access Network
- RAT0/RAT1: Resource Allocation Type 0/1
- RBG: Resource Block Group
- ROM: Read Only Memory
- SB BF: Subband Beamforming
- SE: Section Extension
- SE11: Section Extension 11
- SRS: Sounding Reference Signal
- TISPAN: Telecoms & Internet converged Services & Protocols for Advanced Networks
- UE: User Equipment
- UWB: Ultra-Wideband
- WCDMA: Wideband Code Division Multiple Access
- WiMAX: Worldwide Interoperability for Microwave Access
- WLAN: Wireless Local Area Network

## Claims

1. A method, comprising:
providing (S410), through application of the Section Extension 11, SE11, an offset information indicating an offset between a first allocated Physical Resource Block, PRB, among PRBs of a bundle of PRBs and a lower PRB bundle boundary related to a first PRB among the PRBs of the bundle of PRBs,
wherein the bundle of PRBs is associated with an endpoint terminal and wherein the first PRB is an allocated or a non-allocated PRB.

2. The method according to claim 1, wherein the providing (S410) further comprises reassigning and using a reserved 6bit field in a SE11 header for providing the offset information.

3. The method according to claim 2, wherein, if a number of PRBs bundled in the bundle of PRBs comprises more than 64 PRBs and the offset comprises more than 62 PRBs, the reassigning and using further comprises indicating by a predetermined value indicated in the reserved 6bit field that the offset comprises more than 62 PRBs.

4. The method according to claim 3, wherein, if the number of bundled PRBs comprises more than 64 PRBs and the offset comprises more than 62 PRBs, the method further comprises appending an additional field to the SE11 header; and using the additional field for providing the offset information.

5. The method according to claim 4, further comprising appending the additional field after the numBundPrb and before the first of contlnd fields, or further comprising appending the additional field after the bfiniCompHdr and before the first of bfiniCompParam fields.

6. The method according to any of claims 1 to 5,
wherein the method further comprises enabling and/or disabling, on an Open Radio Unit, O-RU, a use of an additional field at the SE11 for providing the offset information,
wherein, when the use of the additional field is disabled, the method further comprises using a reserved 6bit field in a SE11 header for providing the offset information at maximum for up to 63 PRBs,
wherein for example the additional field is present after the numBundPrb and before the first of contlnd fields, or wherein the additional field is present after the bfiniCompHdr and before the first of bfiniCompParam fields.

7. A method, comprising:
receiving (S510), through application of the Section Extension 11, SE11, an offset information indicating an offset between a first allocated Physical Resource Block, PRB, among PRBs of a bundle of PRBs and a lower PRB bundle boundary related to a first PRB among the PRBs of the bundle of PRBs,
wherein the bundle of PRBs is associated with an endpoint terminal and wherein the first PRB is an allocated or a non-allocated PRB;
based on the offset information, calculating (S520) a size of the bundle of PRBs; and
based on the calculating, applying (S530) subband beamforming on beams associated with the endpoint terminal.

8. An apparatus (600), comprising
at least one processor (610); and
at least one memory (620) storing instructions that, when executed by the at least one processor (610), cause the apparatus (600) at least to:
provide (S410), through application of the Section Extension 11, SE11, an offset information indicating an offset between a first allocated Physical Resource Block, PRB, among PRBs of a bundle of PRBs and a lower PRB bundle boundary related to a first PRB among the PRBs of the bundle of PRBs,
wherein the bundle of PRBs is associated with an endpoint terminal and wherein the first PRB is an allocated or a non-allocated PRB.

9. The apparatus (600) according to claim 8, wherein the apparatus (600) caused to provide the offset information further comprises the apparatus (600) being caused to reassign and use a reserved 6bit field in a SE11 header for providing the offset information.

10. The apparatus (600) according to claim 8, wherein, if a number of PRBs bundled in the bundle of PRBs comprises more than 64 PRBs and the offset comprises more than 62 PRBs, the apparatus caused to reassign and use the reserved 6bit field further comprises the apparatus being caused to indicate by a predetermined value indicated in the reserved 6bit field that the offset comprises more than 62 PRBs.

11. The apparatus (600) according to claim 10, wherein, if the number of bundled PRBs comprises more than 64 PRBs and the offset comprises more than 62 PRBs, the apparatus is further caused to append an additional field to the SE11 header; and to use the additional field for providing the offset information.

12. The apparatus (600) according to claim 11, wherein the apparatus is further caused to append the additional field after the numBundPrb and before the first of contlnd fields, or the apparatus is further caused to append the additional field after the bfiniCompHdr and before the first of bfiniCompParam fields.

13. The apparatus (600) according to any of claims 8 to 12,
wherein the apparatus is further caused to enable and/or disable, on an Open Radio Unit, O-RU, a use of an additional field at the SE11 for providing the offset information,
wherein, when the use of the additional field is disabled, the apparatus is further caused to use a reserved 6bit field in a SE11 header for providing the offset information at maximum for up to 63 PRBs,
wherein for example the additional field is present after the numBundPrb and before the first of contlnd fields, or wherein the additional field is present after the bfiniCompHdr and before the first of bfiniCompParam fields.

14. An apparatus (700), comprising
at least one processor (710); and
at least one memory (720) storing instructions that, when executed by the at least one processor (710), cause the apparatus (700) at least to:
receive (S510), through application of the Section Extension 11, SE11, an offset information indicating an offset between a first allocated Physical Resource Block, PRB, among PRBs of a bundle of PRBs and a lower PRB bundle boundary related to a first PRB among the PRBs of the bundle of PRBs,
wherein the bundle of PRBs is associated with an endpoint terminal and wherein the first PRB is an allocated or a non-allocated PRB;
based on the offset information, calculate (S520) a size of the bundle of PRBs; and
based on the calculating, apply (S530) subband beamforming on beams associated with the endpoint terminal.

15. A computer program product for a computer, including software code portions for performing the steps of any of claims 1 to 6 or 7, when said product is run on the computer,
wherein for example
the computer program product includes a computer-readable medium on which said software code portions are stored, and/or
the computer program product is directly loadable into the internal memory of the computer and/or transmittable via a network by means of at least one of upload, download and push procedures.
